**Europäisches Patentamt**

(19) **European Patent Office**

**Office européen des brevets**

(11) Numéro de publication: **0 060 856**
**B1**

(12) **FASCICULE DE BREVET EUROPEEN**

(45) Date de publication du fascicule du brevet:
24.07.85

(51) Int. Cl.⁴: **B 29 C 63/10,** F 16 L 9/12,
F 16 L 9/14

(21) Numéro de dépôt: **81902625.3**

(22) Date de dépôt: **16.09.81**

(86) Numéro de dépôt international:
**PCT/FR 81/00119**

(87) Numéro de publication internationale:
**WO 82/01159 (15.04.82** Gazette 82/10)

(54) **PROCEDE POUR RENFORCER UN CORPS CREUX REALISE PAR ENROULEMENTS D'UN PROFILE, PROFILE POUR SA MISE EN OEUVRE ET CANALISATIONS RENFORCEES OBTENUES.**

(30) Priorité: **26.09.80 FR 8020666**

(43) Date de publication de la demande:
**29.09.82 Bulletin 82/39**

(45) Mention de la délivrance du brevet:
**24.07.85 Bulletin 85/30**

(84) Etats contractants désignés:
**AT CH DE GB LI LU NL SE**

(56) Documents cités:
**BE - A - 545 131**
**DE - B - 1 131 869**
**FR - A - 2 140 678**
**FR - A - 2 272 320**
**FR - A - 2 398 604**
**US - A - 3 240 644**
**US - A - 3 969 812**

(73) Titulaire: **SPIE-BATIGNOLLES, Tour Anjou 33, Quai de Dion-Bouton, F-92806 Puteaux (FR)**
Titulaire: **COFLEXIP, 23 Avenue de Neuilly, F-75116 Paris (FR)**

(72) Inventeur: **CHABRIER, Gilbert, 7, Rue Bastienne, F-95160 Montmorency (FR)**

(74) Mandataire: **Bouju, André, 38 Avenue de la Grande Armée, F-75017 Paris (FR)**

ACTORUM AG

## Description

La présente invention concerne un procédé pour renforcer un corps creux de révolution tel qu'une canalisation ou un récipient destiné à être mis sous pression.

Selon ce procédé, on enroule autour du corps creux suivant des spires sensiblement jointives, un profilé flexible et on fixe ce dernier à ce corps creux.

L'invention vise également un profilé comprenant des fibres minérales enrobées dans une résine synthétique, pour la mise en œuvre du procédé conforme à l'invention.

L'invention vise en outre une canalisation renforcée extérieurement au moyen du profilé précité.

On connaît divers procédés pour renforcer extérieurement des canalisations ou récipients cylindriques notamment en acier.

Selon l'un de ces procédés (voir FR-A 2 398 604), on enroule autour de la canalisation ou du récipient des feuillards ou des fils en acier à haute résistance, soit avec, soit sans tension.

Grâce à cet enroulement, on augmente la résistance de la canalisation ou du récipient à l'égard des pressions internes.

Mais les canalisations ou récipients ainsi renforcés sont difficiles à protéger à l'égard de la corrosion et les enroulements ne sont fixés au corps renforcé qu'aux extrémités.

Dans un second procédé (voir US-A 3 969 812), on enroule autour de la canalisation ou du récipient des fibres de verre imprégnées dans une couche de résine synthétique liquide ou partiellement polymérisée. La polymérisation de la résine est ensuite réalisée par passage dans un four.

Cet enroulement de fibres de verre ne peut être réalisé qu'en appliquant une tension faible sur les fibres de verre, ce qui, compte tenu de la différence de module dans le cas le plus courant de l'acier et du verre, oblige à une expansion hydraulique importante du corps renforcé pour utiliser toute la résistance du verre.

Toutefois cet enroulement de fibres de verre noyées dans une résine synthétique permet d'obtenir une excellente protection contre la corrosion et les fibres sont solidaires du corps renforcé sur toute sa surface.

Le but de la présente invention est de fournir un procédé qui permet d'améliorer considérablement la résistance d'un corps creux de révolution à l'égard des pressions internes, ce procédé étant de mise en œuvre particulièrement commode et utilisant au maximum la résistance admissible des fibres utilisées sans expansion du corps renforcé.

Dans le procédé visé par l'invention, on enroule autour du corps creux, suivant des spires sensiblement jointives, des fibres et on fixe ces dernières audit corps creux.

Suivant l'invention, ce procédé est caractérisé en ce qu'on utilise un profilé flexible comprenant des fibres enrobées dans une résine synthétique, lesdites fibres s'étendant dans la direction de ce profilé, et en ce qu'on enroule ledit profilé autour du corps creux suivant une ou plusieurs couches avec une tension et une épaisseur d'enroulement déterminées pour que, lorsque le corps creux est rempli par le fluide sous pression, les contraintes susceptibles de s'exercer dans le corps et dans les enroulements dudit profilé atteignent leur maximum admissible sensiblement en même temps et on fixe en continu ce profilé autour du corps creux et les différentes spires de profilé entre elles par collage ou chauffage.

On utilise ainsi, dans des conditions optimales, la résistance utile du matériau constituant le profilé et on évite l'expansion du corps creux qui présente dans la pratique de nombreux inconvénients.

Par ailleurs, le profilé utilisé dans ce procédé est parfaitement adapté au renforcement des canalisations ou récipients en acier. En effet, ce profilé de fibres noyées dans une résine synthétique complètement polymérisée présente une limite élastique beaucoup plus élevée que l'acier, de sorte qu'il est possible d'enrouler ce profilé autour des canalisations ou récipients avec une tension relativement importante, nettement inférieure à la limite admissible pour un tel profilé.

De plus, la fixation d'un tel profilé sur la canalisation ou le récipient peut être exécutée très facilement, par exemple par collage ou thermofusion, si la résine utilisée est une résine thermoplastique.

Dans ces conditions, on résout en même temps d'une manière très commode, le problème de la protection de la canalisation ou du récipient à l'égard de la corrosion.

L'invention vise également un profilé particulier comprenant des fibres minérales ou organiques enrobées dans une résine synthétique, pour la mise en œuvre du procédé conforme à l'invention.

Suivant cet aspect de l'invention, l'épaisseur du profilé est suffisamment faible pour que le rapport des tensions créées du fait du rayon de courbure, lors de l'enroulement dans les fibres extérieures sur les tensions créées dans les fibres intérieures soit inférieur à 1, 2.

L'invention vise également une canalisation renforcée extérieurement par un enroulement réalisé selon le procédé conforme à l'invention, caractérise en ce qu'elle comprend au moins une couche dudit enroulement, le profilé étant collé ou soudé sur la canalisation et les spires de ce profilé étant collées ou soudées les unes aux autres.

D'autres particularités et avantages de l'invention apparaîtront encore dans la description ci-après.

Aux dessins annexés donnés à titre d'exemples non limitatifs:

– la figure 1 est un schéma qui illustre le procédé conforme à l'invention;

– la figure 2 est une vue d'une portion de canalisation partiellement revêtue extérieurement par un enroulement obtenu à partir d'un profilé conforme à l'invention;

- la figure 3 est une vue en coupe transversale à grande échelle d'un profilé conforme à l'invention;

- la figure 4 est une vue en coupe partielle, à échelle agrandie, suivant le plan IV–IV de la figure 2;

- les figures 5 et 6 représentent sous forme de courbes les contraintes exercées dans les différents matériaux d'une canalisation renforcée conformément à l'invention, en fonction du taux d'allongement de ces matériaux;

- la figure 7 est une variante de réalisation d'une canalisation renforcée conformément à l'invention.

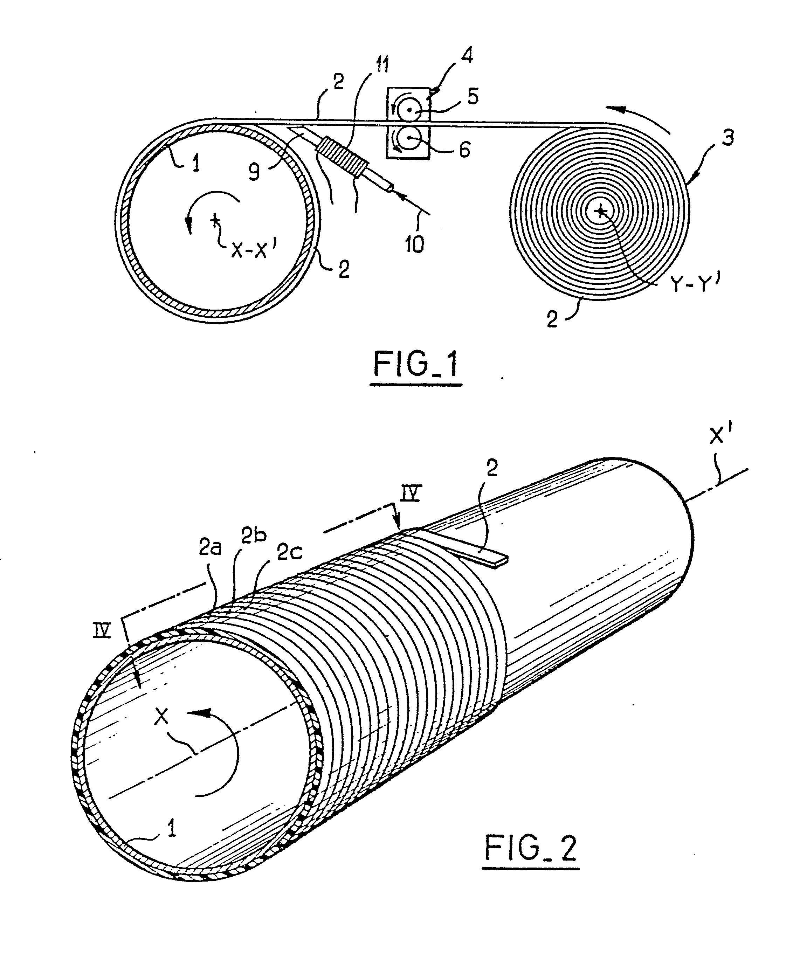

Dans la réalisation selon les figures 1 et 2, on a représenté une canalisation cylindrique 1 en acier, destinée à contentir un fluide sous pression, renforcée extérieurement par des enroulements à spires jointives 2a, 2b, 2c, etc., réalisés au moyen d'un profilé 2 en matériau flexible.

Dans l'exemple représenté, les spires 2a, 2b, 2c sont perpendiculaires à l'axe X–X'de la canalisation 1.

Conformément au procédé selon l'invention, on utilise un profilé flexible 2 en un matériau dont la limite élastique est supérieure à celle du matériau (acier) de la canalisation 1 et on enroule ce profilé autour de cette canalisation 1 avec une tension suffisante pour que, lorsque la canalisation 1 est mise sous pression, les contraintes susceptibles de s'exercer dans cette canalisation et dans les enroulements de ce profilé 2 atteignent leur maximum admissible sensiblement en même temps.

Pour effectuer cet enroulement, comme indiqué sur la figure 1, on fait tourner la canalisation 1 autour de son axe XX', le profilé 2 étant amené sur cette canalisation 1 à partir d'une bobine 3 montée en rotation sur un axe Y–Y' autour duquel le profilé 2 est enroulé en spirale.

Cette bobine 3 est mobile le long de l'axe Y–Y' pour permettre au profilé 2 de s'enrouler autour de la canalisation 1, suivant une hélice à spires jointives.

La tension de l'enroulement est réglée au moyen d'un dispositif de freinage 4 disposé entre la canalisation 1 et la bobine 3. Ce dispositif de freinage 4 comprend deux galets 5, 6 prenant appui sur le profilé 2.

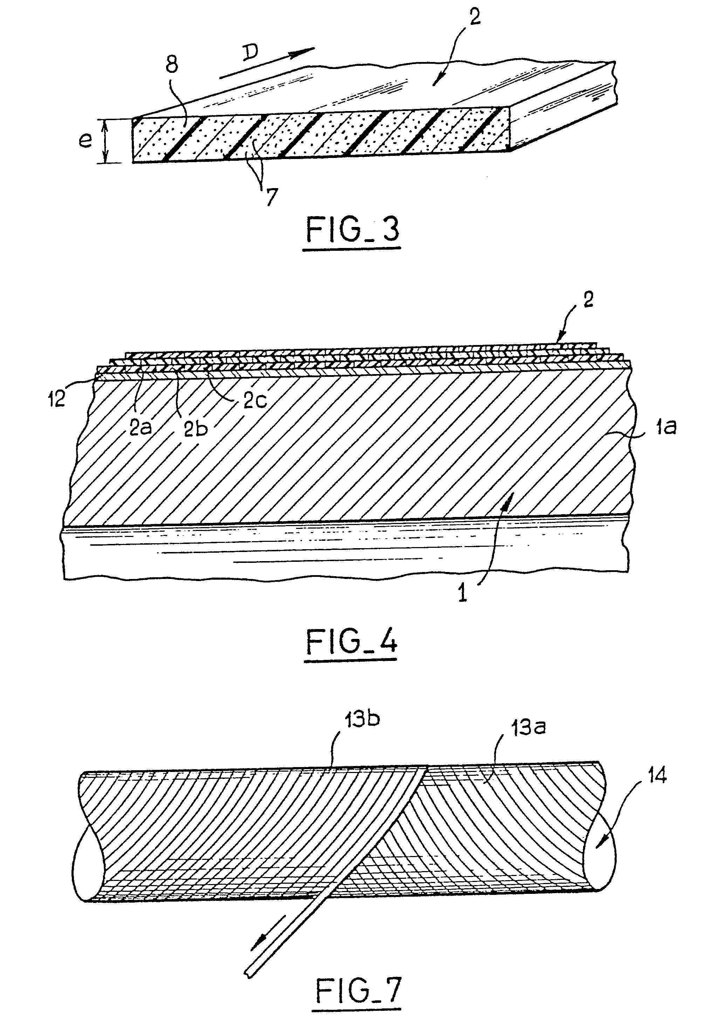

Le profilé 2 utilisé comprend (voir figure 3) des fibres 7 enrobées dans une résine synthétique 8, ces fibres s'étendant dans la direction longitudinale D de ce profilé.

Ces fibres 7 peuvent être des fibres minérales telles que les fibres de verre, d'amiante, de bore et de carbone. Ces fibres 7 peuvent également être en une matière organique suffisamment résistante telle que le kevlar.

Les fibres 7 sont cependant constituées de préférence par des fibres de verre, ce matériau étant le plus économique au point de vue performance et coût.

Le profilé 2 est lors de l'enroulement, collé sur la canalisation ainsi que sur la ou les couches d'enroulement sous-jacentes.

La résine 8 du profilé 2 est de préférence une résine thermoplastique telle que polyamide ou polychlorure de vinyle. En utilisant de telles résines, il est possible en effet de réaliser la fixation du profilé flexible 2 sur la canalisation 1 et sur les enroulements précédents par thermofusion ou thermocollage.

Pour effectuer ce thermocollage, il suffit de disposer sous le profilé 2 à proximité de la canalisation 1, une tubulure 9 soufflant de l'air chaud 10 (voir figure 1). Cet air est chauffé par exemple au moyen d'une résistance électrique chauffante 11 enroulée autour de la tubulure 9. L'air est ainsi chauffé à une température suffisante pour assurer la fusion superficielle de la résine 8 du profilé 2, ce qui permet d'obtenir lors de l'enroulement le collage de ce profilé sur la canalisation et le collage des différentes spires de l'enroulement.

Pour faciliter le collage, il est avantageux d'appliquer sur la surface extérieure de la canalisation 1, une couche de primaire d'adhérence 12 (voir figure 4). Comme montré sur cette figure 4 il est également avantageux que les spires de l'enroulement soient disposées en quinconce suivant les différentes couches successives.

Pour obtenir un profilé 2 présentant la résistance à la traction et le module d'élasticité désirés, il faut que ce profilé renferme au moins 50% en volume de fibres minérales. Cette condition est réalisée lorsque la résine synthétique 8 renferme au moins 70% en poids de fibres de verre 7.

Un tel profilé 2 de fibres enrobées dans une résine peut être fabriqué aisément par extrusion, imprégnation ou analogue.

On voit notamment sur les figures 3 et 4 que le profilé 2 présente une section rectangulaire relativement aplatie.

Le fait que le profilé 2 présente une épaisseur e faible permet de limiter le rapport des tensions créées du fait du rayon de courbure, lors de l'enroulement dans les fibres 7 extérieures sur les tensions créées dans les fibres intérieures. De préférence, on détermine l'épaisseur e pour que le rapport précité soit inférieur à 1, 2. Dans ces conditions la tension créée dans les fibres extérieures ne dépasse pas de plus de 20% la tension créée dans les fibres intérieures.

La canalisation 1 renforcée extérieurement par des enroulements suivant des spires jointives d'un profilé 2 est capable de supporter des pressions internes beaucoup plus élevées que celles admises en l'absence d'enroulements, comme on l'expliquera plus en détail plus loin.

De plus, du fait que les enroulements du profilé 2 sont collés contre la canalisation 1 et les uns avec les autres, le revêtement obtenu est parfaitement étanche, de sorte que la canalisation 1 se trouve en même temps efficacement protégée à l'égard de la corrosion. De plus, ce revêtement confère simultanément à la canalisaton 1 une légère isolation thermique ce qui est avantageux lorsque cette canalisation est destinée à transporter un fluide à basse ou haute température.

On va maintenant décrire un exemple détaillé de réalisation selon l'invention.

Caractéristiques de la canalisation 1:
Acier X 52
– diamètre extérieur: 61 cm
– épaisseur de la paroi: 7,92 mm
– limite élastique: 36,5 kg/mm²

Caractéristiques du profilé 2:
– nature de la résine: polyamide
– nature des fibres: verre
– pourcentage des fibres:　70% en poids
– limite de rupture en traction: 136,5 kg/mm²
– module d'élasticité: 4500 kg/mm²

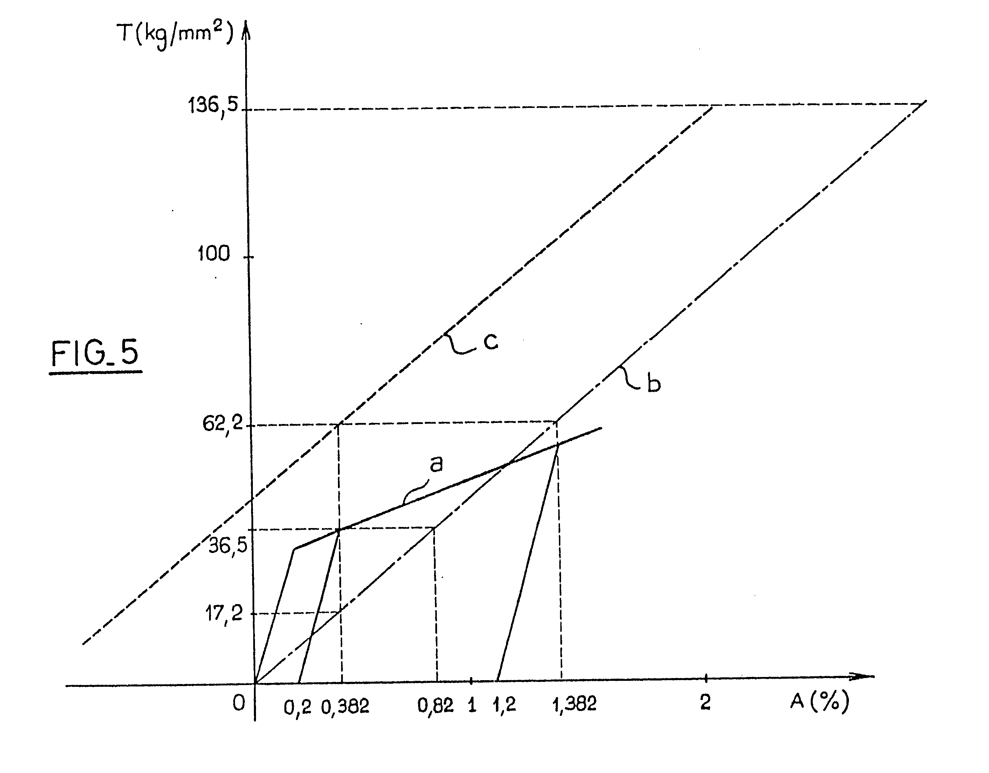

Sur la figure 5, la courbe a représente le module d'élasticité de l'acier de la canalisation 1 et la courbe b est relative au module d'élasticité du profilé 2 dans le cas où ce dernier est enroulé sans tension autour de la canalisation en acier 1.

On constate qu'à la limite d'élasticité de la canalisation 1 (36,5 kg/mm²) l'allongement A est de 0,3825%. Dans ces conditions, la contrainte induite dans le profilé 2 est seulement de 17,2 kg/mm² soit à peine 0,126 de sa limite de rupture qui est égale à 136,5 kg/mm². Les propriétés mécaniques du profilé 2 sont donc très mal utilisées lorsqu'il est enroulé sans tension autour de la canalisation 1.

Si par contre l'enroulement du profilé 2 est exécuté avec une tension correspondant à un allongement A de 1% de ce profilé, on obtient pour ce dernier la courbe c. Dans un tel cas, on obtient à la limite d'élasticité de l'acier de la canalisation 1 une contrainte dans le profilé 2 égale à 62,2 kg/mm² soit seulement 0,456 de sa limite de rupture ce qui est très acceptable.

Le même résultat pourrait être obtenu avec un enroulement du profilé 2 exécuté sans tension (voir courbe b) mais avec expansion de la canalisation. Toutefois l'expansion de la canalisation 1 atteint dans ces conditions la valeur de 1,1% qui est nettement supérieur à la limite élastique de l'acier. Il y aurait par conséquent alors déformation importante et inadmissible de l'acier de la canalisation.

Pour réaliser un renforcement ou frettage optimal de la canalisation 1 au moyen d'un profilé 2 fibre-résine, on se fixe la contrainte maximale admissible pour le profilé 2 et pour la canalisation en acier 1 et on calcule l'épaisseur $e_v$ des enroulements de ce profilé à mettre en place autour de la canalisation 1 de façon que la contrainte circonférentielle due à la pression interne soit répartie par moitié entre la canalisation et le renforcement et que les contraintes susceptibles de s'exercer dans les enroulements du profilé 2 et dans la canalisation 1 en acier atteignent leur maximum admissible en même temps.

Cette épaisseur $e_v$ est égale à: $\dfrac{Ta \cdot e_a}{Tv}$

relation dans laquelle $e_a$ est l'épaisseur de la canalisation en acier 1 et Ta et Tv sont les contraintes maximales admises pour l'acier et le profilé 2 fibre-résine. Dans le cas de l'exemple précédent:

Ta　=　0,73× 36,5　=　26,6 kg/mm²
Tv　=　0,5 ×136,5　=　68,2 kg/mm²

Il en résulte donc que

$$e_v = \frac{26,6}{68,2} \times 7,92$$

soit environ 3 mm.

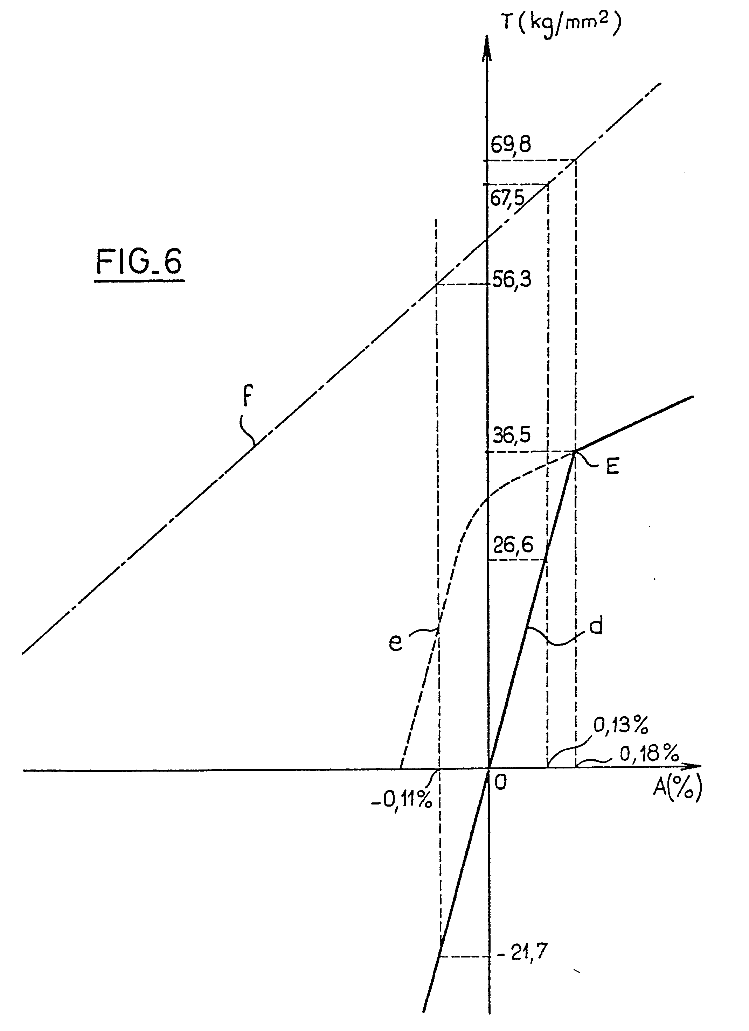

La figure 6 représente les contraintes exercées dans le profilé 2 fibre-résine et dans la canalisation en acier 1.

L'origine des allongements est prise par rapport à la canalisation 1 en acier (courbe d) ayant subi une expansion jusqu'à sa limite élastique (E). La courbe e en pointillés est relative à l'acier avant expansion. La courbe f est relative au profilé 2 enroulé sous tension sur la canalisation 1.

Lorsque la pression interne de la canalisation 1 est nulle, la précontrainte (tension d'enroulement) dans le profilé 2 est de 56,3 kg/mm² et celle de l'acier (compression) est de 21,7 kg/mm². Cette précontrainte a pour effet de comprimer la canalisation d'acier de –0,11%.

Lorsque la canalisation 1 est sous pression de service, la contrainte dans la canalisation en acier 1 est de 26,6 kg/mm² soit 0,73 E (E = limite élastique), et dans le profilé 2 fibre-résine, est de 67,5 kg/mm² soit environ 0,5 R (R = résistance à la rupture de ce profilé).

Dans ces conditions le taux de travail moyen à la limite de service de l'ensemble est de:

$$\frac{26,6 + 67,5}{36,5 + 136,5} =$$

54% de la limite élastique moyenne de l'ensemble, l'acier s'étant déformé plastiquement, au lieu de 73% dans le cas de l'acier seul.

A la limite d'élasticité E de l'acier le taux de travail serait seulement de:

$$\frac{36,5 + 69,8}{36,5 + 136,5} =$$

61% de la limite élastique moyenne de l'ensemble au lieu de 100% dans le cas de l'acier seul.

Ainsi grâce à l'invention, il est possible d'améliorer considérablement la sécurité des canalisations destinées à supporter une pression interne tout en doublant la pression de service. Inversement pour une pression de service donnée il est possible d'utiliser des canalisations d'épaisseur nettement moindre, ce qui se traduit par un important gain de poids de l'ensemble de la canalisation de l'ordre de 45%.

L'invention peut s'appliquer au renforcement de tous les corps de révolution devant résister à des pressions internes.

Dans le cas d'enroulements à spires sensiblement perpendiculaires à l'axe de révolution de ces corps, ces derniers doivent également supporter seuls la résistance aux efforts longitudinaux, les efforts radiaux dus à la pression interne étant absorbés par moitié par le corps de révolution de base, et par moitié par le renforcement extérieur réalisé par les enroulements du profilé 2 fibre-résine.

Bien entendu, l'invention peut s'appliquer au renforcement de canalisations ou de récipients réalisés en des matériaux autres que l'acier, tels que la fonte ductile, l'amiante-ciment, le béton ordinaire ou isolant ainsi que les tubes de forage.

Dans le cas où il est souhaitable de renforcer le corps cylindrique de révolution également à l'égard des efforts exercés suivant l'axe de ces corps, les spires de l'enroulement du profilé peuvent être obliques et éventuellement croisées selon les différentes couches successives, comme dans le cas des enroulements formés des spires 13a,13b de la canalisation 14 représentée sur la figure 7. Dans une variante du procédé conforme à l'invention, le thermocollage du profilé 2 fibre-résine peut être assuré par des éléments chauffants infrarouges disposés à proximité du profilé lors de son enroulement. Ce chauffage peut encore être réalisé par un faisceau laser ou au moyen d'ultra-sons.

**Revendications**

1. Procédé pour renforcer un corps creux (1) de révolution tel qu'une canalisation ou un récipient destiné à contenir un fluide sous pression, dans lequel on enroule autour du corps creux (1), suivant des spires sensiblement jointives (2a, 2b, 2c), des fibres et on fixe ces dernières audit corps creux, caractérisé en ce qu'on utilise un profilé (2) flexible comprenant des fibres (7) enrobées dans une résine synthétique (8), lesdites fibres (7) s'étendant dans la direction (D) de ce profilé, et en ce qu'on enroule ledit profilé autour du corps creux suivant une ou plusieurs couches avec une tension et une épaisseur d'enroulement déterminées pour que, lorsque le corps creux (1) est rempli par le fluide sous pression, les contraintes susceptibles de s'exercer dans le corps et dans les enroulements dudit profilé (2) atteignent leur maximum admissible sensiblement en même temps et on fixe en continu ce profilé autour du corps creux (1) et les différentes spires de profilé entre elles par collage ou chauffage.

2. Procédé conforme à la revendication 1, caractérisé en ce que les fibres sont minérales ou organiques et sont choisies parmi les fibres de verre, d'amiante, de bore, de carbone et de kevlar.

3. Procédé conforme à l'une quelconque des revendications 1 ou 2, caractérisé en ce que ladite résine synthétique est une résine thermoplastique.

4. Procédé conforme à la revendication 3, caractérisé en ce que pour fixer le profilé (2) sur le corps creux (1) on chauffe la surface du profilé destinée à être appliquée sur le corps creux ou sur la couche précédente de profilé à une température suffisante pour qu'on obtienne la fusion superficielle de la résine (8).

5. Profilé comprenant des fibres minérales ou organiques enrobées dans une résine synthétique, pour la mise en oeuvre du procédé conforme à l'une quelconque des revendications 1 à 4, caractérisé en ce que l'épaisseur (e) du profilé est suffisamment faible pour que le rapport des tensions créées du fait du rayon de courbure, lors de l'enroulement dans les fibres extérieures sur les tensions créées dans les fibres intérieures soit inférieur à 1,2.

6. Profilé conforme à la revendication 5, caractérisé en ce que la résine synthétique est constituée par une résine polyamide.

7. Canalisation renforcée extérieurement par un enroulement réalisé au moyen d'un profilé (2) conforme à l'une quelconque des revendications 5 ou 6, caractérisée en ce qu'elle comprend au moins une couche dudit enroulement, le profilé (2) étant collé ou soudé sur la canalisation (1) et les spires (2a, 2b, 2c) de ce profilé étant collées ou soudées les unes aux autres.

8. Canalisation conforme à la revendication 7, caractérisée en ce que les spires (2a, 2b, 2c) de l'enroulement sont sensiblement perpendiculaires à l'axe (X–X') de la canalisation (1).

9. Canalisation conforme à la revendication 7, caractérisée en ce que les spires (13a,13b) de l'enroulement sont obliques par rapport à l'axe de la canalisation (14).

**Patentansprüche**

1. Verfahren zum Verstärken eines rotationssymmetrischen Hohlkörpers (1) wie einer Kanalisation oder eines Behälters zur Aufnahme eines fluiden Mediums unter Druck, bei welchem um den Hohlkörper (1) herum längs im wesentlichen nebeneinanderliegenden Schraubenwindungen (2a, 2b, 2c) Fasern aufgewickelt werden und letztere an dem Hohlkörper befestigt werden, dadurch gekennzeichnet, dass ein flexibles Profilteil (2) verwendet wird, welches Fasern (7) umfasst, die von einem synthetischen Harz (8) umhüllt sind, wobei die genannten Fasern (7) sich in der Richtung (D) dieses Profilteils erstrecken, und dass das genannte Profilteil um den Hohlkörper herum in einer oder mehreren Schichten aufgewickelt wird mit einer Spannung und einer Wicklungsdicke, die derart bestimmt sind, dass die Beanspruchungen, wenn der Hohlkörper (1) mit dem unter Druck stehenden fluiden Medium angefüllt ist, welche in dem Körper und in den Wicklungen des genannten Profilteils (2) auftreten können, ihr zulässiges Maximum im wesentlichen gleichzeitig erreichen, und dieses Profilteil durchgehend um den Hohlkörper herum (1) sowie die verschiedenen Windungen des Profilteils untereinander durch Verklebung und Erhitzung befestigt werden.

2. Verfahren nach Anspruch 1, dadurch gekennzeichnet, dass die Fasern mineralisch oder organisch sind und ausgewählt sind unter den Glasfasern, Asbestfasern, Borfasern, Kohlenstoffasern und Kevlar.

3. Verfahren nach Anspruch 1 oder 2, dadurch gekennzeichnet, dass das genannte synthetische Harz ein thermoplastisches Harz ist.

4. Verfahren nach Anspruch 3, dadurch gekennzeichnet, dass zur Befestigung des Profilteils (2) auf dem Hohlkörper (1) die Oberfläche des Profilteils, welche dazu bestimmt ist, gegen den Hohlkörper oder gegen die vorausgehende Lage des Profilteils angelegt zu werden, auf eine ausreichende Temperatur erhitzt wird, damit ein oberflächliches Schmelzen des Harzes (8) auftritt.

5. Profilteil mit mineralischen oder organischen Fasern, die von einem synthetischen Harz eingehüllt sind, zur Durchführung des Verfahrens nach einem der Ansprüche 1 bis 4, dadurch gekennzeichnet, dass die Dicke (e) des Profilteils ausreichend gering ist, damit das Verhältnis der Spannungen, die aufgrund des Krümmungsradius beim Aufwickeln in den äusseren Fasern erzeugt werden, zu den Spannungen, die in den inneren Fasern erzeugt werden, kleiner als 1,2 ist.

6. Profilteil nach Anspruch 5, dadurch gekennzeichnet, dass das synthetische Harz ein Polyamidharz ist.

7. Kanalisation, die äusserlich durch eine Wicklung verstärkt ist, welche mittels eines Profilteils (2) nach Anspruch 5 oder 6 verwirklicht ist, dadurch gekennzeichnet, dass sie wenigstens eine Lage der genannten Wicklung umfasst, wobei das Profilteil (2) auf die Kanalisation (1) aufgeklebt oder aufgeschweisst ist und die Windungen (2a, 2b, 2c) dieses Profilteils miteinander verklebt oder verschweisst sind.

8. Kanalisation nach Anspruch 7, dadurch gekennzeichnet, dass die Windungen (2a, 2b, 2c) der Wicklung im wesentlichen senkrecht zur Achse (X–X') der Kanalisation (1) sind.

9. Kanalisation nach Anspruch 7, dadurch gekennzeichnet, dass die Windungen (13a, 13b) der Wicklung schräg gegenüber der Achse der Kanalisation (14) verlaufen.

**Claims**

1. Method for reinforcing a hollow body (1) of revolution such as a pipe or a container which is intended to contain a fluid under pressure, wherein fibres are wound on the hollow body (1) in substantially contiguous turns (2a, 2b, 2c) and these fibres are fixed to the said hollow body, characterized in that there is employed a flexible strip (2) comprising fibres (7) embedded in a synthetic resin (8), the said fibres (7) extending in the direction (D) of this strip, and that the said strip is wound on the hollow body in one or a number of layers with a tension and a winding thickness so determined that, when the hollow body (1) is filled with the fluid under pressure, the stresses which may be exerted in the body and in the windings of the said strip (2) attain their maximum permissible value substantially at the same time and this strip is fixed continuously around the hollow body (1) and the different turns of the strip are fixed to each other by gluing or heating.

2. Method in accordance with claim 1, characterized in that the fibres are mineral or organic and are chosen from fibres of glass, asbestos, boron, carbon and kevlar.

3. Method in accordance with either of claims 1 or 2, characterized in that the said synthetic resin is a thermoplastic resin.

4. Method in accordance with claim 3, characterized in that, in order to fix the strip (2) on the hollow body (1), that surface of the strip which is intended to be applied on the hollow body or on the previous strip layer is heated to a sufficient temperature to obtain surface melting of the resin (8).

5. Strip comprising mineral or organic fibres embedded in a synthetic resin for the practical application of the method in accordance with any one of claims 1 to 4, characterized in that the thickness (e) of the strip is sufficiently small to ensure that the ratio of stresses developed in the external fibres as a result of the radius of curvature at the time of winding to the stresses developed in the internal fibres is lower than 1.2.

6. Strip in accordance with claim 5, characterized in that the synthetic resin is constituted by a polyamide resin.

7. Pipe reinforced externally by a winding formed by means of a strip (2) in accordance with either of claims 5 or 6, characterized in that it comprises at least one layer of the said winding, the strip (2) being glued or welded to the pipe (1) and the turns (2a, 2b, 2c) of this strip being glued or welded to each other.

8. Pipe in accordance with claim 7, characterized in that the turns (2a, 2b, 2c) of the winding are substantially perpendicular to the axis (X–X') of the pipe (1).

9. Pipe in accordance with claim 7, characterized in that the turns (13a, 13b) of the winding are oblique with respect to the axis of the pipe (14).

0 060 856

FIG_1

FIG_2

FIG_3

FIG_4

FIG_7

FIG. 5

0 060 856

FIG. 6

13